# EUROPÄISCHE PATENTSCHRIFT

(11) **EP 2 781 109 B1**
(45) Veröffentlichungstag und Bekanntmachung des Hinweises auf die Patenterteilung: **14.11.2018**
(21) Anmeldenummer: 12769316.6
(22) Anmeldetag: 14.09.2012
(51) Int. Cl.: H04W 4/02, H04W 64/00, H04W 72/04, H04W 72/10

(54) **VERFAHREN ZUM ÜBERTRAGEN VON DATEN ZWISCHEN EINEM MOBILEN ENDGERÄT UND WENIGSTENS EINEM ORTSFESTEN DATENNETZWERK, MOBILES ENDGERÄT SOWIE KRAFTWAGEN MIT EINEM MOBILEN ENDGERÄT**
METHOD FOR TRANSMITTING DATA BETWEEN A MOBILE TERMINAL AND AT LEAST ONE STATIONARY DATA NETWORK, MOBILE TERMINAL AND MOTOR VEHICLE HAVING A MOBILE TERMINAL
PROCÉDÉ DE TRANSMISSION DE DONNÉES ENTRE UN TERMINAL MOBILE ET AU MOINS UN RÉSEAU DE DONNÉES FIXE, TERMINAL MOBILE ET VÉHICULE AUTOMOBILE ÉQUIPÉ D'UN TERMINAL MOBILE

(30) Priorität: 16.11.2011 DE 102011118706
(43) Veröffentlichungstag der Anmeldung: 24.09.2014
(73) Patentinhaber: Audi AG, 85045 Ingolstadt (DE)
(72) Erfinder: ENGELHARD, Lars, 85290 Ilmendorf (DE); ENGELHARD, Stefanie, 85290 Ilmendorf (DE)
(74) Vertreter: Schuster, Simon
(86) Internationale Anmeldenummer: PCT/EP2012/003861
(87) Internationale Veröffentlichungsnummer: WO 2013/071992

(56) Entgegenhaltungen:
- DE-A1-102004 055 275
- US-A1- 2009 245 199
- US-A1- 2010 323 715
- US-A1- 2011 143 761

## Beschreibung

Die Erfindung betrifft ein Verfahren zum Übertragen von Daten zwischen einem mobilen Endgerät und wenigstens einem ortsfesten Datennetzwerk über wenigstens eine Funkschnittstelle. Zu der Erfindung gehört auch ein mobiles Endgerät mit einem Mobilfunkmodul zum Übertragen von Daten über wenigstens eine Funkschnittstelle und mit einer Steuereinrichtung zum Steuern des Übertragungsvorgangs. Zu der Erfindung gehört auch ein Kraftwagen mit einem solchen mobilen Endgerät. Ein Verfahren und ein Kraftwagen der genannten Art sind aus der US 2010/0323715 A1 bekannt. Ein weiteres Verfahren zur Optimierung der Datenübertragung ist aus DE 10 2004 055 275 A1 bekannt.

Bei einem mobilen Zugang zu einem ortsfesten Datennetz wird durch eine Funkschnittstelle zum Austauschen von Daten eine bestimmte Übertragungsbandbreite zur Verfügung gestellt. So ist es zum Beispiel möglich, das Internet als ortsfestes Datennetz über die Funkschnittstelle des UMTS (Universal Mobile Telecommunications System) von einem mobilen Endgerät aus zu erreichen. Solche mobilen Endgeräte, wie etwa Mobiltelefone oder PDAs (PDA - Personal Digital Assistent), nutzen in der Regel die jeweils zu einem bestimmten Zeitpunkt zur Verfügung stehende Übertragungsbandbreite für die parallele Übermittlung sämtlicher mit dem ortsfesten Datennetz auszutauschenden Daten, wie etwa Sprache, Konfigurationsdaten oder Daten von Internetdiensten. Die Übertragungsbandbreite kann allerdings stark ortsabhängig sein. Zudem kann sie auch an einem gegebenen Ort mit der Zeit schwanken und hierbei insbesondere von Umgebungsparametern abhängig sein, wie etwa den Witterungsverhältnissen oder der Anzahl der zeitgleich an dem Ort betriebenen mobilen Endgeräte. Insbesondere bei mobilen Endgeräten in Fahrzeugen kann die Übertragungsbandbreite daher innerhalb kurzer Zeit stark schwanken. Bei geringer zur Verfügung stehender Übertrazer Zeit stark schwanken. Bei geringer zur Verfügung stehender Übertragungsbandbreite kommt es dann zu starken Einschränkungen durch die gleichzeitige und konkurrierende Nutzung der Funkschnittstelle durch unterschiedliche, durch das mobile Endgerät bereitgestellte Dienste.

In der oben genannten Druckschrift ist dazu ein Verfahren beschrieben, bei welchem für ein in einem Fahrzeug befindlichen mobilen Endgerät eine Fahrroute des Fahrzeugs ermittelt wird und überprüft wird, ob sich entlang der Fahrtroute Probleme mit einer Übertragungsbandbreite einer Funkschnittstelle des Datennetzwerks ergeben könnte. Gegebenenfalls werden durch ein Steuergerät des Mobilfunknetzes Parameterwerte der Funkschnittstelle derart verändert, dass sich bei dem Fahrzeug beim Passieren der problematischen Region keine Übertragungsschwierigkeiten ergeben. Beispielsweise für solche Parameterwerte, die durch das Steuergerät des Mobilfunknetzes verändert werden können, sind ein Zeitpunkt für ein Handoff, Antwortparameter für ein Multipath-Fading und Übertragungsmodi. Nachteilig bei diesem Verfahren ist, dass hierzu die Funknetzbetreiber ihre Basisstationen mit entsprechenden Steuergeräten ausstatten müssen.

Aufgabe der vorliegenden Erfindung ist es, bei einem mobilen Endgerät bei der Übertragung von Daten über eine Funkschnittstelle Einschränkungen, wie sie sich aufgrund einer Bewegung des mobilen Endgeräts ergeben können, nach Möglichkeit zu vermeiden.

Die Erfindung wird durch die unabhängigen Ansprüche bestimmt. Weiterbildungen der Erfindung sind durch die Unteransprüche gegeben.

Gemäß einem ersten Aspekt der Erfindung ist ein Verfahren vorgesehen, mittels welchem Daten zwischen dem mobilen Endgerät und wenigstens einem ortsfesten Datennetzwerk über wenigstens eine Funkschnittstelle übertragen werden. Bei diesem Verfahren ist das mobile Endgerät dabei nicht darauf angewiesen, dass die Basisstationen der Funkschnittstelle ihre Funkschnittstellenparameter anpassen, wenn das mobile Endgerät sie passiert und währenddessen Daten in ein ortsfestes Datennetzwerk übertragen werden sollen. Stattdessen wird eine Geodatenbank bereitgestellt, in welcher für eine Mehrzahl von Orten und für vorbestimmte Zeitpunkte historische Werte zu den Funkschnittstellenparametern gespeichert sind. In Zusammenhang mit der Erfindung sind dabei unter Funkschnittstellenparametern solche Angaben zu verstehen, aus welchen sich eine Übertragungsbandbreite der wenigstens einen Funkschnittstelle an dem jeweiligen Ort ergibt. Bei dem Wert zu dem Funkschnittstellenparameter kann es sich beispielsweise um eine gemessene Übertragungsbandbreite oder auch einfach um die Angabe handeln, ob die entsprechende Funkschnittstelle überhaupt erreichbar ist oder nicht.

Aus den historischen Werten werden für zukünftige Datenübertragungen voraussichtliche Werte der Funkschnittstellenparameter ermittelt. Gemäß einem weiteren Verfahrensschritt wird dazu zunächst eine voraussichtliche Bewegungsroute des mobilen Endgeräts ermittelt und dann zu wenigstens einem Ort entlang der Bewegungsroute ermittelt, wann das mobile Endgerät voraussichtlich dort ankommt. Zu dem wenigstens einen Ort entlang der Bewegungsroute und zu der voraussichtlichen Ankunftszeit wird dann auf der Grundlage der Geodatenbank ermittelt, welche voraussichtliche Übertragungsbandbreite dort zur Verfügung stehen wird. Durch die Geodatenbank werden historische, also in der Vergangenheit an dem jeweiligen Ort zu den entsprechenden Uhrzeiten tatsächlich schon einmal beobachtete Werte bereitgestellt. Anhand dieser Werte können somit Vorhersagen getroffen werden, welche Übertragungsbandbreite voraussichtlich zur Ankunftszeit verfügbar sein wird. Um nun Daten mit dem wenigstens einen ortsfesten Datennetzwerk über die wenigstens eine Funkschnittstelle reibungslos auszutauschen, wird wenigstens eine Datenübertragung zwischen dem mobilen Endgerät und dem wenigstens einen Datennetzwerk, also wenigstens ein Datenaustauschprozess, in Abhängigkeit von der voraussichtlich entlang der Bewegungsroute an den unterschiedlichen Orten verfügbaren Übertragungsbandbreite reguliert.

Dieses erfindungsgemäße Verfahren weist den Vorteil auf, dass während der Übertragung der Daten die Funkschnittstellenparameter nicht an die Bedürfnisse des mobilen Endgeräts angepasst werden müssen, sondern das mobile Endgerät seine Datenübertragung an die gegebenen Übertragungsbandbreiten entlang seiner Bewegungsroute im Voraus anpasst. Ein hierbei wichtiger Aspekt ist das Bereitstellen der Geodatenbank, in welcher für unterschiedliche Orte die zeitliche Abhängigkeit der Werte zu den Funkstellenparametern gespeichert ist, sodass z. B. auch die von ihrer Auslastung abhängige räumliche Ausdehnung einer UMTS-Zelle (UMTS - Universal Mobile Telecommunication System) zeitabhängig erfasst und daher die Datenübertragung entsprechend angepasst werden kann. Die einzelnen Schritte des Verfahrens können durch das mobile Endgerät selbst oder auch von einer separaten Datenverarbeitungseinrichtung, beispielsweise einem oder mehrerer Server in dem wenigstens einen Datennetzwerk, durchgeführt werden. Es ist auch eine hybride Lösung möglich, bei welcher Teile des Verfahrens durch unterschiedliche Komponenten durchgeführt werden.

Die Geodatenbank kann in Form eines Speichermediums in dem mobilen Endgerät bereitgestellt sein. Es kann sich bei der Geodatenbank auch um einen Datendienst handeln, welchen ein Server des wenigstens einen ortsfesten Datennetzwerks für das mobile Endgerät bereitstellt.

Um die Datenübertragung zu regulieren, ist im Zusammenhang mit der Erfindung allgemein jede Strategie für eine Festlegung von Übertragungszeitpunkten oder für eine Drosselung einer Übertragungsdatenrate eines Datenstroms geeignet. Entscheidend ist hierbei, dass kein Einfluss auf die Funktionsweise der Mobilfunkschnittstelle selbst genommen werden muss. Das Verfahren nimmt die an den unterschiedlichen Orten verfügbaren Übertragungsbandbreiten als gegeben hin. Durch die Auswertung der historischen Werte zu den Funkschnittstellenparametern wird eine voraussichtlich bevorstehende Veränderung der verfügbaren Übertragungsbandbreite im Voraus erkannt und das Übertragungsverhalten des mobilen Endgeräts darauf eingestellt. So wird vermieden, dass es zu einer gegenseitigen Blockierung konkurrierender Dienste des mobilen Endgeräts oder sogar zu einem Verbindungsabbruch kommt. Da weder auf das Mobilfunkmodul des Endgeräts noch auf die Funkschnittstellen Einfluss genommen werden muss, ist das erfindungsgemäße Verfahren in vorteilhafter Weise auch unabhängig von der Technologie der für die Übertragung genutzten Mobilfunknetzwerke.

Zur Regulierung der Datenübertragung sieht eine Ausführungsform des erfindungsgemäßen Verfahrens vor, zu übertragende Daten, die zu einem späteren Zeitpunkt benötigt werden, zeitlich im Voraus zu übertragen und in dem mobilen Endgerät zu speichern. Hierdurch wird dann in vorteilhafter Weise sichergestellt, dass die Daten im Zeitpunkt ihrer geplanten Verwendung auch dann vorhanden sind, wenn zu diesem Zeitpunkt nur eine geringere Übertragungsbandbreite zur Verfügung steht.

Genauso kann das mobile Endgerät auch selbst Daten vorzeitig aussenden. Dies ist z.B. bei Datendiensten sinnvoll, bei denen eine aktuelle Position des mobilen Endgeräts im Datennetz abrufbar ist. Solche Datendienste funktionieren normalerweise nicht, wenn sich das Endgerät z.B. in einem Funkloch befindet. Wird nun erkannt, dass das Endgerät voraussichtlich in ein solches Funkloch geraten wird, so kann das Endgerät vorzeitig Positionsdaten aussenden, durch welche es dem Datendienst die geschätzte Ankunftszeit mitteilt. Dann ist auch für die Zeit, während welcher das Endgerät nicht erreichbar ist, dem Datendienst eine Positionsangabe möglich.

Eine andere Ausführungsform des erfindungsgemäßen Verfahrens sieht vor, die Übertragung von Datenpaketen zu verzögern. Hierdurch können z. B. niederpriore Daten dann zeitlich verzögert übertragen werden, um höherpriore Dienste nicht zu stören. Ein weiterer Vorteil dabei ist, dass asynchrone Datendienste optimal genutzt werden können.

Die zu übertragenden Daten können auch in Bezug auf ihre Kodierung und/oder Kompression verändert werden. So kann z.B. auf eine voraussichtliche Verringerung der Übertragungsbandbreite dadurch reagiert werden, dass bei einem Audio- oder Videodatenstrom die Codierungsparameter angepasst werden, um eine durchgehend unterbrechungsfreie Wiedergabe der Audio- bzw. Videodaten zu gewährleisten.

In Zusammenhang mit einer Priorisierung von Datendiensten sieht eine weitere Ausführungsform des erfindungsgemäßen Verfahrens vor, zum Regulieren der Datenübertragung zu wenigstens zwei Datenpaketen unterschiedliche Prioritäten festzulegen und in Abhängigkeit von diesen Prioritäten unterschiedliche Übertragungszeitpunkte für die beiden Datenpakete festzulegen. Die Vergabe von Prioritäten für einzelne Datenpakete ermöglicht es, auf einfache Weise die Datenübertragung automatisiert zu regulieren.

Beim Ermitteln der voraussichtlichen Bewegungsroute ist man nicht unbedingt darauf angewiesen, dass ein Benutzer des mobilen Endgeräts seinen Zielort und seine geplante Route dorthin angibt. Für den Fall, dass diese Informationen nicht vorliegen, sieht eine Ausführungsform des erfindungsgemäßen Verfahrens vor, zum Ermitteln der voraussichtlichen Bewegungsroute Daten zu wenigstens einem aus den folgenden Aspekten zugrunde zu legen. Aus einer Identität eines momentanen Benutzers des mobilen Endgeräts kann bereits ein wichtiger Hinweis auf die bevorstehende Bewegungsroute des mobilen Endgeräts entnommen werden. Hat der Benutzer bei dem mobilen Endgerät sogar ein Benutzerprofil ausgewählt, durch welches er beispielsweise angibt, ob er das Gerät gerade beruflich oder privat nutzt, so kann auch hieraus auf die Bewegungsroute rückgeschlossen werden. Auch eine momentane Uhrzeit kann einen Hinweis auf das bevorstehende Ziel geben. Es können auch Benutzergewohnheiten über die Zeit gesammelt werden und der Ermittlung der Bewegungsroute zugrundegelegt werden. Auf der Grundlage eines aktuellen oder vorhergesagten Wetters kann ebenfalls ein Hinweis darauf folgen, was ein Benutzer voraussichtlich tun oder nicht tun wird.

Das erfindungsgemäße Verfahren ist nicht darauf beschränkt, die voraussichtliche Übertragungsbandbreite entlang der Bewegungsroute ausschließlich, sozusagen statisch, auf der Grundlage der Geodatenbank zu ermitteln. Vielmehr können Umgebungen auch dynamisch erfasst werden, d. h. zeitlich wechselnde und parameterspezifische Bedingungen können berücksichtigt werden. Hierzu sieht eine Ausführungsform des erfindungsgemäßen Verfahrens vor, eine voraussichtliche Auslastung der wenigstens einen Funkschnittstelle an wenigstens einem Ort entlang der Bewegungsroute zu ermitteln und dann die voraussichtliche Übertragungsbandbreite zusätzlich in Abhängigkeit von der voraussichtlichen Auslastung zu ermitteln. Handelt es sich bei dem mobilen Endgerät beispielsweise um eine Komponente eines Fahrzeugs und wird über den Verkehrsfunk ein Stau auf der Fahrtroute berichtet, so ist davon auszugehen, dass viele im Stau stehende Fahrer mittels ihrer Mobiltelefone einen Anruf zum Benachrichtigen von wartenden Personen tätigen werden. Dies resultiert in der Regel in einer erhöhten Auslastung der Funkschnittstellen, was dann beim Regulieren der Datenübertragung durch das mobile Endgerät berücksichtigt werden kann.

Die Geodatenbank muss die Angaben zu den Mobilfunkschnittstellenparametern für die einzelnen Orte nicht nur in Abhängigkeit von der Zeit enthalten. Um die Übertragung von Daten genauer im Voraus planen zu können, kann neben dem Zeitpunkt zusätzlich auch ein Wert für einen Umgebungsparameter eines bestimmten Orts gespeichert sein. So kann etwa auch gespeichert sein, bei welchem Straßenverkehrsaufkommen der Wert für den Funkschnittstellenparameter gemessen wurde. Genauso kann zu dem Wert für den Funkschnittstellenparameter gespeichert sein, bei welchem Wetter er gemessen wurde und/oder zu welcher Jahreszeit. Auch diese Angaben haben sich als zweckmäßig erwiesen, wenn es um eine treffende Voraussage einer zur Verfügung stehenden Übertragungsbandbreite entlang einer Bewegungsroute geht. Generell ist hier unter einem Umgebungsparameter eine veränderliche Eigenschaft des Orts zu verstehen, von der eine für ein einzelnes mobiles Endgerät verfügbare Übertragungsbandbreite einer Funkschnittstelle an diesem Ort abhängig sein kann.

Ein weiterer Aspekt der Erfindung betrifft ein Verfahren zum Erzeugen der beschriebenen Geodatenbank. Das Verfahren weist dabei den Vorteil auf, dass keine kostenaufwendigen Messfahrten nötig sind, um einem mobilen Endgerät die benötigten Werte zu den Funkschnittstellenparametern bereitzustellen. Das erfindungsgemäße Verfahren sieht vor, von einer Mehrzahl von mobilen Endgeräten deren momentanen Aufenthaltsort zu ermitteln. Des Weiteren werden mittels dieser mobilen Endgeräte die Werte zu den Funkschnittstellenparametern gewonnen. Es wird also hierzu einfach beispielsweise von einem Steuergerät einer Basisstation abgefragt, welchen Wert das mobile Endgerät gerade beim Übertragen von Daten für den Funkschnittstellenparameter misst. Der gewonnene Wert wird dann zusammen mit sowohl dem jeweiligen Ort, an dem sich das mobile Endgerät während der Gewinnung des Werts befand, als auch mit einem Zeitstempel abgespeichert, welcher den Zeitpunkt der Gewinnung des jeweiligen Werts angibt.

Das Verfahren zur Erzeugung der Geodatenbank lässt sich ohne großen Kostenaufwand dahingehend erweitern, dass zu wenigstens einem Wert wenigstens ein weiterer Umgebungsparameter des jeweiligen Orts gespeichert wird, insbesondere das Wetter an dem Ort zum Zeitpunkt der Gewinnung des Werts, ein Maß für das Straßenverkehrsaufkommen zu diesem Zeitpunkt und die Jahreszeit zum Zeitpunkt der Gewinnung. Solche Angaben lassen sich bei einem mobilen Endgerät aufgrund von dessen Vernetzung mit weiteren Datendiensten in der Regel während der Gewinnung ebenfalls ermitteln. Ein weiteres Beispiel ist die Ermittlung einer Wahrscheinlichkeit einer Zusammensetzung des Straßenverkehrs, durch welche erkennbar wird, ob vermehrt Verkehrsteilnehmer mit dem Fahrrad unterwegs sind. Dies lässt sich beispielsweise anhand einer Durchschnittsgeschwindigkeit der einzelnen mobilen Endgeräte erkennen. Die weiteren Umgebungsparameter brauchen nicht unbedingt vom mobilen Endgerät selbst erfasst werden. Sie können je nach Zweckmäßigkeit z.B. auch von derjenigen Einrichtung ermittelt werden, welche die Geodatenbank zusammenstellt.

Ein dritter Aspekt der Erfindung betrifft ein mobiles Endgerät, mittels welchem sich Daten über wenigstens eine Funkschnittstelle mit wenigstens einem ortsfesten Datennetzwerk austauschen lassen. Das mobile Endgerät weist hierzu ein Mobilfunkmodul auf, mittels welchem die Daten über die wenigstens eine Funkschnittstelle austauschbar sind. Eine Steuereinrichtung des mobilen Endgeräts ist dazu ausgelegt, in Abhängigkeit von einer voraussichtlich entlang einer Bewegungsroute des mobilen Endgeräts verfügbaren Übertragungsbandbreite der wenigstens einen Funkschnittstelle Daten mit dem wenigstens einen ortsfesten Datennetzwerk auszutauschen und hierbei eine Ausführungsform wenigstens eines der erfindungsgemäßen Verfahren durchzuführen.

Im Zusammenhang mit der Erfindung kann es sich bei dem erfindungsgemäßen mobilen Endgerät um ein Mobiltelefon, Smartphone, Laptop oder eine andere Kommunikationseinheit handeln, die sich in einem beweglichen Objekt befindet. Diese Kommunikationseinheit kann dabei auch fest in einem Fahrzeug, beispielsweise einem Kraftwagen, integriert sein. Im Zusammenhang mit dem Verfahren zum Erzeugen der Geodatenbank kann zudem bei dem erfindungsgemäßen mobilen Endgerät vorgesehen sein, dass es dazu ausgelegt ist, die aktuelle Verbindungsqualität und andere aktuelle, übertragungsspezifische Parameter selbständig zu ermitteln. Optional können bei dem Endgerät die Uhrzeit und das Datum ermittelt werden, wie es beispielsweise über ein Satellitensystem oder eine andere Funkquellen möglich ist.

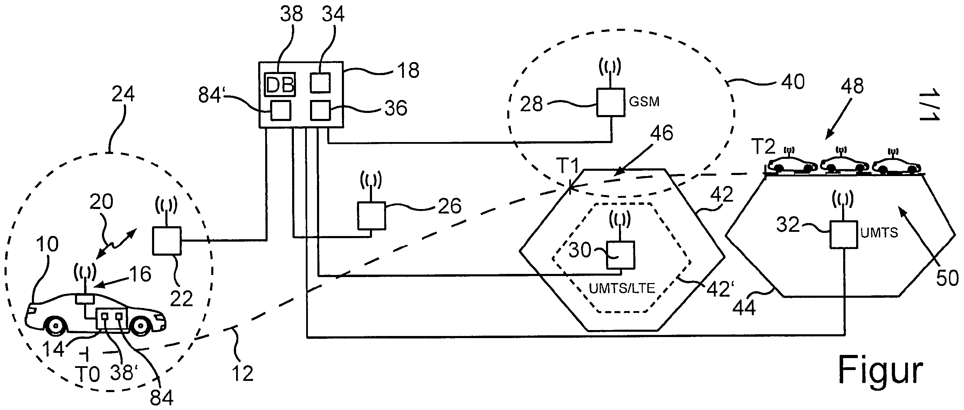

Die Erfindung wird im Folgenden anhand von Ausführungsbeispielen näher erläutert. Dazu zeigt die Figur eine Skizze zu einer Fahrsituation, in welcher sich ein Fahrzeug 10 befindet, welches eine Ausführungsform des erfindungsgemäßen Kraftwagens darstellt. Bei dem Fahrzeug kann es sich beispielsweise um einen Personenkraftwagen handeln. Das Fahrzeug 10 fährt auf einer Fahrtroute 12, auf welcher es sich zu einem Zeitpunkt T0 an dem in der Figur angedeuteten Ort befindet.

In dem Fahrzeug 10 befindet sich ein Steuergerät 14, die über ein Mobilfunkmodul 16 Daten mit unterschiedlichen Servern in einem Datennetzwerk 18, beispielsweise dem Internet, austauscht. Bei dem Steuergerät 14 kann es sich beispielsweise um eine Komponente eines Infotainmentsystems handeln. Das Mobilfunkmodul 16 ist dazu über eine Funkverbindung 20 mit einer Basisstation 22 eines Mobilfunknetzes verbunden. Durch die Basisstation 22 ist eine Funkschnittstelle zu dem Mobilfunknetz gebildet. Eine Reichweite 24 der Basisstation 22 ist derart begrenzt, dass die Funkverbindung 20 nicht während der gesamten Fahrt auf der Fahrtroute 12 aufrechterhalten werden kann. Um auch außerhalb der Reichweite 24 Daten mit dem Datennetzwerk austauschen zu können, muss mittels des Mobilfunkmoduls 16 daher zu einem gegebenen Zeitpunkt eine Funkverbindung zu weiteren Basisstationen 26, 28, 30, 32 aufgebaut werden, die Bestandteil desselben Mobilfunknetzwerks oder eines anderen Mobilfunknetzwerks sein können. Dem Steuergerät 14 ist die aktuelle Position des Fahrzeugs 10 bekannt. Die Ortung kann beispielsweise durch GPS, GLONASS, Galileo oder ein anderes satellitengestütztes System oder auch durch ein terrestrisch gestütztes Positionssystems erfolgt sein. Jedes andere Positionsbestimmungssystem kann auch genutzt werden.

Des Weiteren werden durch das Mobilfunkmodul 16 und/oder das Steuergerät 14 die aktuelle Verbindungsqualität und andere aktuelle, übertragungsspezifische Parameter erfasst. Auch die Uhrzeit und das Datum können miterfasst werden. Dies kann beispielsweise durch Informationen des Satellitensystems oder auch aus anderen Quellen bekannt sein. Durch die Steuereinheit 14 wurde des Weiteren geschätzt, dass sich das Fahrzeug 10 auf der Route 12 befindet. Das Steuergerät 14 greift hierzu auf in der Vergangenheit aggregierte Daten zurück, durch welche das Verhalten des Fahrers auf Grundlage von dessen Gewohnheiten und Eigenschaften der Umgebung des Fahrzeugs 10 statistisch ermittelt wurde. Folgende, exemplarische Daten können dabei ermittelt worden sein: Ein bevorzugter Arbeitsweg, das Einkaufsverhalten, ein bevorzugter Parkplatz (Garage, Tiefgarage oder am Straßenrand), die in der Vergangenheit beobachtete Netzqualität der einzelnen Funkschnittstellen entlang der Route 12, die Art der verfügbaren Funknetze (z. B. 2G, 3G, LTE, WLAN, EDGE, und weiterer Technologien), eine an den Parkplätzen verfügbare Netzzugangstechnologie (z. B. auch drahtgebundene Anbindungen wie LAN, Powerline-Communication PLC), verfügbare Übertragungsbandbreiten der einzelnen Netzwerkzugänge, typische Bewegungsgeschwindigkeiten des Fahrzeugs 10 und in der Vergangenheit gefahrene alternative Fahrtrouten.

Die Daten können mit weiteren, hier exemplarisch dargestellten Informationen erweitert werden: Um herauszufinden, auf welcher Fahrtroute sich das Fahrzeug 10 gerade befindet, kann auf die aktuelle Position zurückgegriffen werden, das Ziel des Fahrers, wie er es beispielsweise in einen Navigationsassistenten eingegeben hat, das aktuelle Datum und die Uhrzeit, die Jahreszeit, Wetterdaten (erfasst beispielsweise durch Fahrzeugsensoren oder eine Wetterstation), die aktuelle Temperatur, die Anzahl der im Fahrzeug 10 befindlichen Personen oder die Identität der in dem Fahrzeug 10 befindlichen Personen. Dies sind nur Beispiele für Parameter, die durch das mobile Endgerät, das Infotainmentsystem 14 und das Mobilfunkmodul 16, bei der Planung der Übertragung von Daten zwischen dem Fahrzeug 10 und dem Datennetzwerk 18 berücksichtigt werden können.

In dem der Figur zugrundeliegenden Beispiel sollen Daten aus zwei unterschiedlichen Datenquellen 34, 36 des Datennetzwerks 18 in das Fahrzeug 10 übertragen werden. Bei der Datenquelle 34 kann es sich beispielsweise um einen Streaming-Server handeln, über welchen Musik-Audiodaten aus dem Datennetzwerk 18 bezogen werden können, die dann in dem Fahrzeug 10 über ein Audiosystem wiedergegeben werden können. Die Daten der Datenquelle 34 müssen deshalb kontinuierlich, ohne längere Unterbrechung heruntergeladen werden. Bei der Datenquelle 36 kann es sich beispielsweise um einen Update-Server handeln, welcher für das Steuergerät 14 und weitere Systeme des Fahrzeugs 10 aktualisierte Betriebssoftware bereitstellt. Die Daten der Datenquelle 36 können stückweise, mit Unterbrechung heruntergeladen werden.

Durch das Steuergerät 14 wird nun für die Fahrt auf der Fahrtroute 12 ermittelt, ob sich ein kontinuierlicher Datenstrom von der Datenquelle 34 zu dem Fahrzeug 10 hin gewährleisten lässt und nebenher aktualisierte Software von der Datenquelle 36 heruntergeladen werden kann. Um diese Vorgaben bezüglich der Verfügbarkeit der Daten der Datenquellen 34, 36 im Fahrzeug 10 zu erfüllen, wird durch das Steuergerät 14 ein Zeitplan erstellt, nach welchem einzelne Datenpakete von den Datenquellen 34, 36 abgerufen werden. In dem Plan kann auch vorgesehen sein, Datenpakete im Voraus herunterzuladen und in einem Cache zu speichern, bevor sie dann tatsächlich in dem Fahrzeug 10 benötigt werden. Durch den Plan kann auch bestimmt sein, wann durch das Mobilfunkmodul 16 zwischen zwei unterschiedlichen Basisstationen 22, 26 bis 32 gewechselt wird und ob das Herunterladen einzelner Datenpakete verzögert wird, um eine voraussichtlich bevorstehende Verschlechterung der Übertragungsqualität dahingehend zu kompensieren.

Das Steuergerät 14 ruft zum Erstellen des Plans aus einer Datenbank 38 Informationen darüber ab, welche Basisstation 22, 26, 28, 30, 32 sich entlang der Fahrtroute 12 befinden. Die Datenbank 38 kann durch einen Server des Datennetzwerks 18 bereitgestellt sein. Die Informationen können sich auch ganz oder teilweise in einer lokalen Datenbank 38' im Fahrzeug 10 oder in dem mobilen Endgerät selbst, also z. B. in dem Steuergerät 14, befinden. Zusätzlich zu den Standorten der Basisstationen 22, 26 bis 32 sind in der Datenbank 38 auch Informationen zu Reichweiten 24, 40, 42, 44 der einzelnen Basisstationen 22, 28, 30, 32 gespeichert. Diese Informationen stellen Funkschnittstellenparameter der durch die Basisstationen 26, 28, 30, 32 gebildeten Funkschnittstellen dar.

Anhand der Daten ermittelt das Steuergerät 14, dass in einem Streckenabschnitt 46 der Fahrtroute 12 eine Verbindung zu der Basisstation 30 aufgebaut werden könnte, bei der es sich um eine Funkschnittstelle mit einer für gewöhnlich großen Übertragungsbandbreite handelt. Beispielsweise kann es sich bei der durch die Basisstation 30 gebildete Funkschnittstelle um eine Funkschnittstelle eines UMTS oder LTE-Funknetzes handeln. Auf der Grundlage der von dem Steuergerät 14 und dem Mobilfunkmodul 16 erfassten Parametern berechnet das Steuergerät 14, dass das Fahrzeug 10 voraussichtlich zu einem Zeitpunkt T1 am Streckenabschnitt 46 ankommen wird. Anhand der Daten aus der Datenbank 38 erkennt das Steuergerät 14, dass zu diesem Zeitpunkt für gewöhnlich die Reichweite der Basisstation 30 auf eine Reichweite 42' geschrumpft ist. Grund für eine solche Schrumpfung kann beispielsweise ein für gewöhnlich zum Zeitpunkt T1 herrschender Berufsverkehr in dem Streckenabschnitt 46 sein. Mit der geschrumpften Reichweite 42' ist die Basisstation 30 für das Fahrzeug 10 in dem Streckenabschnitt 46 nicht erreichbar. Für die Planung der Übertragung der Daten aus den Datenquellen 34 und 36 geht das Steuergerät 14 deshalb davon aus, dass das Mobilfunkmodul 16 bei Erreichen des Streckenabschnitts 46 automatisch zur die Basisstation 28 wechseln wird, welche beispielsweise Bestandteil eines GSM-Funknetzwerks sein kann und daher eine zu geringe Übertragungsbandbreite für die gleichzeitige Übertragung aller Daten aufweist. In dem Streckenabschnitt 46 sollen daher planungsgemäß lediglich die kontinuierlich herunterzuladenden Daten der Datenquelle 34, beispielsweise die Musikdaten, über die Basisstation 28 bezogen werden. Das Herunterladen der Daten aus der Datenquelle 36 kann deshalb für diesen Zeitraum unterbrochen werden. Es kann zusätzlich vorgesehen sein, dass die für die Übertragung der Musikdaten benötigte Bandbreite reduziert wird. Wird der Audiodatenstrom beispielsweise momentan mit 256 kBit/s übertragen und ist die Übertragungsbandbreite der Funkschnittstelle der Basisstation 28 im Streckenabschnitt 46 dafür zu klein, so kann beispielsweise durch Senden eines Signals an die Datenquelle 34 erreicht werden, dass diese die Audioqualität reduziert und so nur noch eine Bandbreite von z.B. 128 kBit/s benötigt wird.

Durch das Steuergerät 14 werden auch Informationen zur aktuellen Verkehrslage auf der Fahrtroute 12 überwacht. Das Steuergerät 14 kann entsprechende Verkehrsdaten beispielsweise aus dem Datennetzwerk 18 über digitalen Rundfunk empfangen. Das Steuergerät 14 erfährt so von einem Verkehrsstau 48 in einem Streckenabschnitt 50. Durch das Steuergerät 14 kann beispielsweise auf der Grundlage eines numerischen Modells ermittelt werden, dass sich der Verkehrsstau 48 auch zu einem Ankunftszeitpunkt T2 des Fahrzeugs 10 am Streckenabschnitt 50 noch nicht aufgelöst haben wird. Aus dem numerischen Modell kann durch das Steuergerät 14 auch ermittelt werden, dass in dem Streckenabschnitt 50 für den Fall, dass sich dort ein Verkehrsstau gebildet hat, eine Basisstation 32 besonders stark ausgelastet ist. Handelt es sich bei der Basisstation 32 beispielsweise um eine UMTS-Basisstation, bedeutet dies, dass für einzelne Mobilfunkteilnehmer nur eine geringe Übertragungsbandbreite zur Verfügung steht. Dies wird durch das Steuergerät 14 ebenfalls bei der Planung der Übertragung der Daten der Datenquellen 34, 36 berücksichtigt.

Die aktuelle Position des mobilen Endgeräts, hier also auch des gesamten Fahrzeugs 10, kann über einen Datendienst aus dem Datennetzwerk 18 abgerufen werden. So ist es z.B. nach dem Parken des Fahrzeugs 10 möglich, dieses durch Abfragen der Position wiederzufinden. In dem Beispiel erkennt das Steuergerät 14, dass sich der Ort am Ende der Fahrtroute 12, an welchem das Fahrzeug 10 voraussichtlich geparkt werden wird, in einem Funkloch befindet. Daher teilt das Steuergerät 14 dem Datendienst bereits während der Fahrt Informationen dazu mit, wo es voraussichtlichen am Ende der Fahrt geparkt sein wird und wann das Fahrzeug 10 dort ankommen wird. Somit ist das Fahrzeug 10 auch dann noch mittels des Datendienstes auffindbar, nachdem es durch den Datendienst nicht mehr über Mobilfunk erreichbar ist, um seine aktuelle Position erfragen zu können.

In dem obigen Beispiel und auch in den nachfolgend beschriebenen Beispielen wird davon ausgegangen, dass die das erfindungsgemäße Verfahren betreffenden Schritte durch eine Datenverarbeitungseinrichtung 84 des mobile Endgeräts durchgeführt werden. Gemäß einer anderen Ausführungsform können einige oder alle dieser Schritte aber auch durch eine separate Datenverarbeitungseinrichtung 84' durchgeführt werden, die sich z.B. im Datennetzwerk 18 befinden kann.

Im Folgenden wird anhand von weiteren Beispielen erläutert, wie durch das Planen der Übertragungszeitpunkte einzelner Datenpakete die Datenübertragung beim Übertragen der Daten zwischen einem Fahrzeug und einem ortsfesten Datennetzwerk an die während einer Bewegung des Fahrzeugs veränderliche Übertragungsbandbreite angepasst werden kann.

In einem ersten Beispiel fährt ein Benutzer mit seinem Personenkraftwagen, in welchem ein mobiles Endgerät integriert ist, von seinem Arbeitsplatz nachhause. Während der Fahrt wird ein Softwareupdate für ein nicht sicherheitskritisches Steuergerät des Personenkraftwagens über einen Verteiler, d. h. einen entsprechenden Update-Server in dem Datennetzwerk, als von nun ab verfügbar bei dem mobilen Endgerät angemeldet. Während der Fahrt hört der Fahrer Internetradio, für das kontinuierlich Daten aus dem Internet heruntergeladen werden müssen. Dieser Datenfluss sollte nicht abreißen, da es ansonsten zu einer Unterbrechung der in dem Personenkraftwagen abgespielten Musik kommt. Durch das mobile Endgerät wird eine aktuelle Position des Personenkraftwagens auf der Heimwegstrecke kontinuierlich erfasst.

Gemäß einer ersten Variante des Beispiels sei die Übertragungsbandbreite entlang der Heimwegstrecke derart hoch, dass der Fahrer durchgehend Internetradio hören kann und gleichzeitig das Softwareupdate heruntergeladen werden kann. Durch das mobile Endgerät wird eine Geodatenbank dahingehend abgefragt, welche Mobilfunkschnittstellen entlang der Heimwegstrecke erreichbar sind. Zu den einzelnen Mobilfunkschnittstellen liest das mobile Endgerät des Weiteren aus der Geodatenbank die über die einzelnen Mobilfunkschnittstellen erzielbaren Übertragungsbandbreiten als Funktion der Zeit aus. Das mobile Endgerät berechnet für einzelne Zeitpunkte, wo es sich auf der Heimwegstrecke befinden wird und erkennt, dass zu jedem Zeitpunkt die Übertragungsbandbreite voraussichtlich groß genug sein wird, um den Datenfluss über das Internetradio und das Softwareupdate herunterzuladen. Mit anderen Worten wird durch das mobile Endgerät erkannt, dass das Internet auf dem ganzen Heimweg voraussichtlich mit einer Übertragungsbandbreite erreichbar sein wird, welche einen bestimmten Mindestwert nicht unterschreitet. Das mobile Endgerät lädt daher gleichzeitig den Datenstrom für das Internetradio und das Softwareupdate herunter.

Gemäß einer zweiten Variante dieses Beispiels ist die Übertragungsbandbreite so hoch, dass der Fahrer Internetradio und gleichzeitig das Softwareupdate herunterladen kann. Das Endgerät ermittelt aber auch, dass es auf dem Heimweg voraussichtlich starke Schwankungen, insbesondere tiefe Einbrüche, bei der Übertragungsbandbreite geben wird. Dies kann es anhand der Route und der in der Geodatenbank enthaltenen Daten erkennen. Zu mehreren Orten entlang der Route ergibt sich aus den Daten nämlich, dass zu einer vorausberechneten Ankunftszeit dort die Übertragungsbandbreite sehr viel geringer ist, als es zum Herunterladen sowohl des Datenstroms fürs Internetradio als auch des Softwareupdates nötig ist. Das Endgerät muss daher entscheiden, ob es das Softwareupdate herunterlädt, aber mit einer sehr geringen Datenrate, sodass das Internetradio nicht unterbrochen wird, oder ob das Softwareupdate verzögert wird. Es könnte z. B. sein, dass einem normalen Stellplatz des Autos die Übertragungsbandbreite größer und zuverlässiger ist. Dann könnte das Herunterladen des Updates bis zur Ankunft an diesem Stellplatz verzögert werden. Die Entscheidung muss so fallen, dass das Internetradio niemals unterbrochen wird, da andernfalls der Benutzer unzufrieden wäre.

Gemäß einer dritten Version dieses Beispiels befindet sich das Endgerät in einem Einzugsbereich eines Mobilfunknetzes mit geringer Datenrate, z. B. eines 2G-Netzes. Das Endgerät verzögert daher das Softwareupdate solange, bis genug Datenübertragungsbandbreite zur Verfügung steht. Hierbei kann das Endgerät die vorher gesammelten Daten über die Gewohnheiten des Benutzers, das Fahrzeug und die voraussichtlichen Fahrstrecken nutzen, um einen besseren Zeitpunkt für das Softwareupdate zu wählen.

Ein weiteres Beispiel verdeutlicht hierzu, wie die Berücksichtigung von Gewohnheiten eines Benutzers eines mobilen Endgeräts und zusätzlich von Wetterdaten ebenfalls einer Planung der Übertragung von Daten zugrundegelegt werden kann. Gemäß diesem Beispiel fährt ein Benutzer mit seinem Kraftwagen, in welchen wieder ein Endgerät integriert sei, von seinem Arbeitsplatz nachhause. Es ist kein Ziel in dem Navigationssystem angegeben. Das Endgerät weiß, an welcher Position der Heimwegstrecke es sich befindet. Gemäß einer ersten Version dieses Beispiels erkennt das Endgerät, dass Sommer ist und die Temperatur über 30 °C liegt. Aus dem erlernten Benutzerverhalten wird durch das Endgerät vorhergesagt, dass der Fahrer den See nahe dessen Wohnung mit großer Wahrscheinlichkeit anfahren wird. Das Endgerät nimmt dies deshalb als Ziel der Fahrtroute an und ermittelt entsprechend die entlang dieser Fahrtroute verfügbaren Übertragungsbandbreiten.

Gemäß einer zweiten Version des Beispiels erkennt das mobile Endgerät wieder, dass Sommer ist und es jedoch regnet. Aus dem Benutzerverhalten lässt sich durch das Endgerät nun vorhersagen, dass der Fahrer direkt zu seiner Wohnung fahren wird. Das Endgerät legt daher dieses Ziel einer Berechnung einer wahrscheinlichsten Fahrtroute zugrunde. Durch die Vorhersage des Ziels kann dann wieder auf die wahrscheinlich zukünftige Netzabdeckung rückgeschlossen werden. Somit können die anstehenden Datenübertragungsdienste priorisiert, und, wenn nötig, verzögert werden.

In einem weiteren Beispiel wird erläutert, wie sich noch genauere Vorhersagen bezüglich einer verfügbaren Übertragungsbandbreite entlang einer Reiseroute gewinnen lassen, wenn in einer Geodatenbank die Werte zu einzelnen Funkschnittstellenparametern der unterschiedlichen Orte nicht nur in Abhängigkeit von vorbestimmten Zeitpunkten, sondern auch von weiteren Umgebungsparametern der Orte abgespeichert sind. Gemäß diesem Beispiel fährt ein Benutzer wieder mit einem Kraftwagen mit integriertem Endgerät von seinem Arbeitsplatz nachhause. Das Ziel sei dem mobilen Endgerät bekannt. Die Werte für die Funkschnittstellenparameter seien in der Geodatenbank jahreszeitlich abhängig bereitgestellt und in dieser Form für das mobile Endgerät verfügbar. Für das Beispiel sei weiter angenommen, dass Sommer ist. Gemäß einer ersten Version des Beispiels greift das mobile Endgerät auf eine Untermenge der gesammelten Daten (Netzverfügbarkeit, Art des Netzes und dergleichen) zurück, welche die Verkehrssituation zur entsprechenden Jahreszeit, also hier Sommer, berücksichtigt. Zum Beispiel ist denkbar, dass im Sommer mehr Verkehrsteilnehmer mit dem Fahrrad unterwegs sind als im Winter. Gemäß einer zweiten Version des Beispiels sei angenommen, dass es regnet. Das mobile Endgerät greift deshalb auf eine Untermenge der Geodaten zurück, welche die Verkehrssituation zur entsprechenden Jahreszeit (Sommer) bei Regen berücksichtigt. Hier wäre z. B. denkbar, dass sich aus den Geodaten für das mobile Endgerät ergibt, dass die Verkehrssituation ähnlicher zur Winterzeit als zur Sommerzeit ist, da wahrscheinlich mehr Leute mit dem Pkw als mit dem Fahrrad unterwegs sind. Hierdurch lassen sich dann durch das mobile Endgerät vorhersagen zur Netzqualität und zur Übertragungsbandbreite machen, bei welcher Schwankungen, wie z. B. eine atmende Zelle bei einem UMTS-Mobilfunksystem, berücksichtigt werden.

Im Zusammenhang mit einer Herstellung einer Geodatenbank, wie sie durch die mobilen Endgeräte in der beschriebenen Weise genutzt werden kann, kann vorgesehen sein, dass Daten über Parameter eines Benutzers des mobilen Endgeräts selber gespeichert werden und diese Daten entweder in dem Endgerät selbst und/oder an einer zentralen Datenverarbeitungseinheit ausgewertet und gesammelt werden. Die Daten lassen sich dabei mit weiteren Nutzerdaten korrelieren, d.h. die Daten können auch über mehrere Benutzer und mehrere Endgeräte gemittelt werden. Zum Beispiel kann die Netzabdeckung einer Strecke mit mehreren Fahrzeugen mit entsprechenden mobilen Endgeräten über verschiedene Uhrzeiten ermittelt werden. Durch die Nutzung mehrerer mobiler Endgeräte zum Erfassen der Geodaten kann ein als Schwarmintelligenz bezeichneter Effekt erzielt werden: Indem beispielsweise mehrere Fahrzeuge zu unterschiedlichen Tageszeiten durch eine Mobilfunkzelle eines UMTS-Systems fahren, können so beim Zusammentragen der Geodaten eine atmende Zelle und andere temporäre Phänomene (Abschattung, Multipath-Ausbreitung) erkannt werden.

Die so aggregierten Daten können auf dem Endgerät und/oder nach einer Übertragung zu einer oder mehreren Datenverarbeitungseinheiten verarbeitet werden. Um den Datenschutz zu gewährleisten, können die Datensätze anonymisiert werden. Eine zuvorige Aufbereitung der Daten im Endgerät ist denkbar, um die schutzwürdigen Informationen vor dem Versenden in ihrer Gesamtheit zu verarbeiten und nur Ergebnisse zu versenden; gegebenenfalls werden diese dann wieder anonymisiert. Das Endgerät ermittelt dann auf Grundlage dieser Daten (Geodaten), d.h. durch Auswertung historischer benutzer- und gerätespezifischer Datensätze sowie aktueller Parameter, das wahrscheinlichste Ziel einer momentanen Fahrt. Mögliche Ziele (ggf. mit statistischer Wahrscheinlichkeit gewichtet) erlauben es dann in der geschriebenen Weise, die Datenverbindungen zu optimieren.

Durch das Beispiel ist gezeigt, wie die Konnektivität eines jeden sich bewegenden Endgeräts verbessert werden kann, welches mit dem Internet oder zukünftigen globalen Vernetzungen über Luftschnittstellen verbunden ist. Zeitliche Schwankungen, ein momentaner Netzausbau und Technologieerweiterungen sind anhand der verwendeten Geodaten mit zeitlicher Verknüpfung erkennbar. Durch den generischen Einsatz ist das Verfahren entkoppelt von den verfügbaren Mobilfunktechnologien und Übertragungstechniken und kann daher einfach auch an zukünftige Technologien angepasst werden. Insgesamt ergibt sich beim Zusammentragen der Geodaten und deren Nutzung durch die mobilen Endgeräte ein selbstständiges erlernen der Netzabdeckung und eine Optimierung der Konnektivität der mobilen Endgeräte.

## Patentansprüche

1. Verfahren zum Übertragen von Daten zwischen einem mobilen Endgerät (14, 16) und wenigstens einem ortsfesten Datennetzwerk (18) über wenigstens eine Funkschnittstelle (22, 26 bis 32), umfassend die Schritte:
- Bereitstellen einer Geodatenbank (38), in welcher für eine Mehrzahl von Orten (46, 50) Werte zu Funkschnittstellenparametern (24, 40, 42, 42', 44) gespeichert sind, aus welchen sich eine Übertragungsbandbreite der wenigstens einen Funkschnittstelle (22, 26 bis 32) an dem jeweiligen Ort (46, 50) ergibt,
- Ermitteln einer voraussichtlichen Bewegungsroute (12) des mobilen Endgeräts (14, 16),
- Ermitteln einer voraussichtlichen Ankunftszeit (T1, T2) des mobilen Endgeräts (14, 16) an wenigstens einem Ort (46, 50) entlang der Bewegungsroute (12),
- Ermitteln einer voraussichtlichen Übertragungsbandbreite an wenigstens einem Ort (46, 50) entlang der Bewegungsroute (12) für die voraussichtlichen Ankunftszeit (T1, T2) auf def Grundlage der Geodatenbank (38),
- Übertragen der Daten zwischen dem mobilen Endgerät (14, 16) und dem wenigstens einen Datennetzwerk (18) über die wenigstens eine Funkschnittstelle (22, 26 bis 32) und hierbei Regulieren wenigstens einer Datenübertragung in Abhängigkeit von der voraussichtlich entlang der Bewegungsroute (12) verfügbaren Übertragungsbandbreite, wobei in der Geodatenbank für vorbestimmte Zeitpunkte (T1, T2) historische Werte zu den Funkschnittstellenparametern (24, 40, 42, 42', 44) gespeichert sind, so dass durch die Geodatenbank in der Vergangenheit an dem jeweiligen Ort zu den entsprechenden Uhrzeiten tatsächlich schon einmal beobachtete Werte bereitgestellt sind, und dass das Bestimmen der voraussichtlichen Übertragungsbandbreite umfasst:
- Ermitteln der voraussichtlichen Übertragungsbandbreite an dem wenigstens einen Ort für die voraussichtlichen Ankunftszeit (T1, T2) auf der Grundlage der Geodatenbank (38), wobei ein Steuergerät (14) des mobilen Endgerätes (14, 16) erkennt, dass sich ein Ort am Ende der Bewegungsroute (12), an welchem ein Fahrzeug (10), in welchem sich das mobile Endgerät (14, 16) befindet, voraussichtlich geparkt werden wird, in einem Funkloch befindet, und einem Datendienst aus dem Datennetzwerk (18) bereits während der Fahrt des Fahrzeugs (10) Informationen dazu mitteilt, wo das Fahrzeug voraussichtlich am Ende der Fahrt geparkt sein wird und wann das Fahrzeug dort ankommen wird, wobei der Datendienst dazu vorgesehen ist, dass nach dem Parken des Fahrzeugs die Position des Fahrzeugs zum Wiederfinden des Fahrzeugs abgefragt wird, und somit das Fahrzeug auch dann noch mittels des Datendienstes auffindbar ist, nachdem das Fahrzeug durch den Datendienst nicht mehr über Mobilfunk erreichbar ist, um die Position des Fahrzeugs zu erfragen.

2. Verfahren nach Anspruch 1, wobei zum Regulieren der Datenübertragung wenigstens eine der folgenden Maßnahmen durchgeführt wird: es werden Daten, die zu einem späteren Zeitpunkt benötigt werden, zeitlich im Voraus übertragen und in dem mobilen Endgerät gespeichert; das mobile Endgerät sendet Daten vorzeitig aus; es wird eine Übertragung von Datenpaketen verzögert; Datenpakete werden in ihrer Codierung oder Kompression angepasst.

3. Verfahren nach Anspruch 1 oder 2, wobei zum Regulieren der Datenübertragung zu wenigstens zwei Datenpaketen unterschiedliche Prioritäten festgelegt und in Abhängigkeit von diesen Prioritäten unterschiedliche Übertragungszeitpunkte für die beiden Datenpakete festgelegt werden.

4. Verfahren nach einem der vorhergehenden Ansprüche, wobei zum Ermitteln der voraussichtlichen Bewegungsroute (12) Daten zu wenigstens einem aus den folgenden Aspekten zugrunde gelegt werden: zu einer Identität des Benutzers des mobilen Endgeräts; zu einem von dem Benutzer ausgewählten Benutzerprofil; zu einer momentanen Uhrzeit; zu Benutzergewohnheiten; zu einem aktuellen oder vorhergesagten Wetter.

5. Verfahren nach einem der vorhergehenden Ansprüche, wobei eine voraussichtliche Auslastung der wenigstens einen Funkschnittstelle (22, 26 bis 32) an dem wenigstens einen Ort (46, 50) entlang der Bewegungsroute (12) ermittelt wird und die voraussichtliche Übertragungsbandbreite zusätzlich in Abhängigkeit von der voraussichtlichen Auslastung ermittelt wird.

6. Verfahren nach einem der vorhergehenden Ansprüche, wobei in der Geodatenbank (38) die Werte zu den Funkschnittstellenparametern (22, 26 bis 32) zusätzlich als Funktion wenigstens eines weiteren Umgebungsparameters des wenigstens einen Orts (46, 50) gespeichert sind, insbesondere dem Wetter an dem Ort, dem Straßenverkehrsaufkommen, der Jahreszeit, und hierbei die voraussichtliche Übertragungsbandbreite auch in Abhängigkeit von aktuellen Daten zu dem wenigstens einen weiteren Umgebungsparameter ermittelt wird.

7. Mobiles Endgerät (14), das ein Mobilfunkmodul (16) aufweist, mittels welchem Daten mit wenigstens einem ortsfesten Datennetzwerk (18) über wenigstens eine Funkschnittstelle (22, 26 bis 32) austauschbar sind, und bei welchem eine Steuereinrichtung (14) dazu ausgelegt ist, gemäß einem Verfahren nach einem der Ansprüche 1 bis 6 über das Mobilfunkmodul (16) in Abhängigkeit von einer voraussichtlich entlang einer Bewegungsroute des mobilen Endgeräts (14, 16) verfügbaren Übertragungsbandbreite der wenigstens einen Funkschnittstelle (22, 26 bis 32) Daten mit dem wenigstens einen ortsfesten Datennetzwerk (18) auszutauschen.

8. Kraftwagen (10) mit einem mobilen Endgerät (14, 16) gemäß Anspruch 7.

## Claims

1. Method for transmitting data between a mobile terminal (14, 16) and at least one stationary data network (18) via at least one wireless interface (22, 26 to 32), comprising the following steps:
- Providing a geodatabase (38), in which values for wireless interface parameters (24, 40, 42, 42', 44) are stored for a number of locations (46, 50), from which a transmission bandwidth for the at least one wireless interface (22, 26 to 32) at the particular location (46, 50) is derived,
- Determining an anticipated movement route (12) for the mobile terminal (14, 16),
- Determining an anticipated arrival time (T1, T2) for the mobile terminal (14, 16) at at least one location (46, 50) along the movement route (12),
- Determining an anticipated transmission bandwidth at at least one location (46,50) along the movement route(12)for the anticipated arrival time (T1, T2) on the basis of the geodatabase (38),
- Transmitting the data between the mobile terminal (14, 16) and the at least one data network (18) via the at least one wireless interface (22, 26 to 32) and, in doing so, regulating at least one data transmission depending on the anticipated transmission bandwidth available along the movement route (12),
wherein
historical values for wireless interface parameters (24, 40, 42, 42', 44) are stored in the geodatabase for predetermined times (T1, T2), such that values that have actually already been observed in the past are provided by the geodatabase for the particular location at the corresponding times, and which comprises determining the anticipated transmission bandwidth:
- Determining the anticipated transmission bandwidth at the at least one location for the anticipated arrival time (T1, T2) on the basis of the geodatabase(38), wherein a control device (14) of the mobile terminal (14, 16) recognises that a location at the end of the movement route (12), at which a vehicle (10), in which the mobile terminal (14, 16) is located, is likely to be parked, is located in a dead zone, and a data service from the data network (18) conveys, during the vehicle's (10) journey, information on where the vehicle is expected to be parked at the end of the journey and when the vehicle will arrive there, wherein the data service is designed such that after parking the vehicle, the position of the vehicle is queried in order to relocate the vehicle, and, consequently, in this case, the vehicle can also be traceable by means of the data service, after the vehicle can no longer be reached by mobile telephony via the data service, in order to request the position of the vehicle.

2. Method according to claim 1, wherein, in order to regulate data transmission, at least one of the following measures is implemented: data that will be needed at a subsequent time is transmitted in advance and stored in the mobile terminal; the mobile terminal transmits the data prematurely; a transmission of data packets is delayed; the coding or compression of data packets is adapted.

3. Method according to claim 1 or 2, wherein, in order to regulate data transmission to at least two data packets, different priorities are established and different transmission times for both data packets are established on the bases of these priorities.

4. Method according to any one of the preceding claims, wherein, in order to determine the anticipated movement route (12), data relating to at least one of the following aspects is used: relating to an identity of the user of the mobile terminal; to a user profile chosen by the user; to an instantaneous time; to the user's habits; to current or predicted weather.

5. Method according to any one of the preceding claims, wherein an anticipated use of the at least one wireless interface (22, 26 to 32) at the at least one location (46, 50) along the movement route (12) is determined and the anticipated transmission bandwidth is also determined on the basis of the anticipated use.

6. Method according to any one of the preceding claims, wherein the wireless interface parameter values (22, 26 to 32) are also stored in the geodatabase (38) as a function of at least one further environmental parameter of the at least one location (46, 50), in particular the weather at the location, the volume of traffic, the season and, in doing so, the anticipated transmission bandwidth is also determined on the basis of current data relating to the at least one further environmental parameter.

7. A mobile terminal (14) having a mobile phone module (16), by means of which data can be exchanged with at least one stationary data network (18) via at least one wireless interface (22, 26 to 32), and wherein a control device (14) is designed, according to a method according to one of the claims 1 to 6, to exchange data with the at least one stationary data network (18) via the mobile phone module (16) on the basis of a transmission bandwidth anticipated to be available to the at least one wireless interface (22, 26 to 32) along a movement route of the mobile terminal (14, 16).

8. Vehicle (10) with a mobile terminal (14, 16) according to claim 7.

## Revendications

1. Procédé de transmission de données entre un terminal mobile (14, 16) et au moins un réseau de données fixe (18) via au moins une interface radio (22, 26 à 32), comprenant les étapes de :
- mise à disposition d'une base de données géographiques (38), dans laquelle des valeurs relatives à des paramètres d'interface radio (24, 40, 42, 42', 44) sont enregistrées pour une majorité d'endroits (46, 50), à partir desquelles il résulte une largeur de bande de transmission de l'au moins une interface radio (22, 26 à 32) à l'endroit (46, 50) respectif,
- détermination d'un itinéraire de déplacement probable (12) du terminal mobile (14, 16),
- détermination d'une heure d'arrivée probable (T1, T2) du terminal mobile (14, 16) à au moins un endroit (46, 50) le long de l'itinéraire de déplacement (12),
- détermination d'une largeur de bande de transmission probable à au moins un endroit (46, 50) le long de l'itinéraire de déplacement (12) pour l'heure d'arrivée probable (T1, T2) sur la base de la base de données géographiques (38),
- transmission des données entre le terminal mobile (14, 16) et l'au moins un réseau de données (18) via l'au moins une interface radio (22, 26 à 32) et régulation ce faisant d'au moins une transmission de données en fonction de la largeur de bande de transmission probablement disponible le long de l'itinéraire de déplacement (12),
dans lequel
dans la base de données géographiques pour des moments prédéfinis (T1, T2), des valeurs historiques relatives aux paramètres d'interface radio (24, 40, 42, 42', 44) sont enregistrées de telle sorte que des valeurs effectivement déjà observées une fois aux heures correspondantes à l'endroit respectif dans le passé sont mises à disposition par la base de données géographiques, et que la définition de la largeur de bande de transmission probable comprend :
- la détermination de la largeur de bande de transmission probable à l'au moins un endroit pour l'heure d'arrivée probable (T1, T2) sur la base de la base de données géographiques (38), dans lequel un appareil de commande (14) du terminal mobile (14, 16) détecte qu'un endroit à la fin de l'itinéraire de déplacement (12), à laquelle un véhicule (10), dans lequel se trouve le terminal mobile (14, 16), sera probablement stationné, se trouve dans une zone hors réseau et communique à un service de données du réseau de données (18) déjà pendant la circulation du véhicule (10) des informations sur où le véhicule sera probablement stationné à la fin de la circulation et quand le véhicule y arrivera, dans lequel le service de données est prévu pour qu'après le stationnement du véhicule, la position du véhicule soit demandée pour retrouver le véhicule, et ainsi le véhicule puisse aussi être trouvé au moyen du service de données, après que le véhicule n'est plus accessible par le service de données via téléphonie mobile pour demander la position du véhicule.

2. Procédé selon la revendication 1, dans lequel pour la régulation de la transmission de données, au moins une des mesures suivante est réalisée : les données, qui sont nécessaires à un moment ultérieur, sont transmises temporellement en avance et enregistrées dans le terminal mobile ; le terminal mobile envoie des données de manière anticipée ; une transmission de paquets de données est retardée ; les paquets de données sont adaptés du point de vue de leur codage ou compression.

3. Procédé selon la revendication 1 ou 2, dans lequel pour la régulation de la transmission de données, différentes priorités sont fixées pour au moins deux paquets de données et différents moments de transmission sont fixés pour les deux paquets de données en fonction de ces priorités.

4. Procédé selon l'une quelconque des revendications précédentes, dans lequel pour la détermination de l'itinéraire de déplacement probable (12), des données relatives à au moins un des aspects suivants servent de base : sur une identité de l'utilisateur du terminal mobile; sur un profil utilisateur sélectionné par l'utilisateur; sur une heure actuelle ; sur des habitudes de l'utilisateur ; sur une météo actuelle ou prévue.

5. Procédé selon l'une quelconque des revendications précédentes, dans lequel une utilisation probable de l'au moins une interface radio (22, 26 à 32) à l'au moins un endroit (46, 50) est déterminée le long de l'itinéraire de déplacement (12) et la largeur de bande de transmission probable est déterminée en plus en fonction de l'utilisation probable.

6. Procédé selon l'une quelconque des revendications précédentes, dans lequel dans la base de données géographiques (38), les valeurs relatives aux paramètres d'interface radio (22, 26 à 32) sont enregistrées en plus en tant que fonction d'au moins un autre paramètre environnemental de l'au moins un endroit (46, 50), en particulier la météo à l'endroit, le trafic routier, la saison, et ce faisant la largeur de bande de transmission probable est également déterminée en fonction de données actuelles relatives à l'au moins un autre paramètre environnemental.

7. Terminal mobile (14), qui présente un module de téléphonie mobile (16), au moyen duquel des données sont échangeables avec au moins un réseau de données fixe (18) via au moins une interface radio (22, 26 à 32), et dans lequel un dispositif de commande (14) est conçu, conformément à un procédé selon l'une quelconque des revendications 1 à 6 pour échanger des données avec l'au moins un réseau de données fixe (18) via le module de téléphonie mobile (16) en fonction d'une largeur de bande de transmission probablement disponible le long d'un itinéraire de déplacement du terminal mobile (14, 16) de l'au moins une interface radio (22, 26 à 32).

8. Véhicule automobile (10) avec un terminal mobile (14, 16) selon la revendication 7.
